# FASCICULE DE BREVET EUROPEEN

(11) **EP 2 961 966 B1**
(45) Date de publication et mention de la délivrance du brevet: **02.09.2020**
(21) Numéro de dépôt: 14718637.3
(22) Date de dépôt: 24.02.2014
(51) Int. Cl.: F02C 7/14, F02C 7/224

(54) **PROCÉDÉ ET DISPOSITIF DE RÉGULATION DE REFROIDISSEMENT D'HUILE D'UNE TURBOMACHINE**
VERFAHREN UND VORRICHTUNG ZUR REGELUNG DER ÖLKÜHLUNG IN EINER TURBOMASCHIN
METHOD AND DEVICE FOR REGULATING THE COOLING OF OIL IN A TURBOMACHINE

(30) Priorité: 27.02.2013 FR 1351733
(43) Date de publication de la demande: 06.01.2016
(73) Titulaire: Safran Aircraft Engines, 75015 Paris (FR)
(72) Inventeur: GAMEIRO, Sébastien, F-77550 Moissy-Cramayel Cedex (FR); ANDRE, Brice, F-77550 Moissy-Cramayel Cedex (FR); MATHON MARGUERITTE, Guillaume, F-77550 Moissy-Cramayel Cedex (FR); POTEL, Nicolas, F-77550 Moissy-Cramayel Cedex (FR)
(74) Mandataire: Cabinet Beau de Loménie
(86) Numéro de dépôt international: PCT/FR2014/050382
(87) Numéro de publication internationale: WO 2014/131973

(56) Documents cités:
- FR-A1- 2 951 228
- FR-A1- 2 969 701
- US-A- 2 865 580
- US-A- 3 300 965
- US-A1- 2009 313 999
- US-A1- 2011 232 293

## Description

### DOMAINE DE L'INVENTION

L'invention concerne un procédé de régulation de refroidissement d'huile et un dispositif de refroidissement d'huile pour turbomachine, et plus particulièrement un procédé de régulation de refroidissement d'huile et un dispositif de refroidissement d'huile de turbomachine comprenant deux échangeurs thermiques.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères. Les turbopropulseurs (turbomoteur entrainant une hélice) sont des turbomoteurs utilisés comme moteur d'avion.

### ETAT DE LA TECHNIQUE ANTERIEURE

On connait un dispositif de refroidissement d'huile de turbomachine comprenant un premier échangeur thermique monté en série avec un deuxième échangeur thermique, le premier échangeur thermique étant un échangeur huile/air tandis que le deuxième échangeur thermique est un échangeur huile/carburant.

Dans ce type de dispositif de refroidissement, lorsque l'air est particulièrement froid et que la turbomachine tourne à haut régime, par exemple lors du décollage, l'huile atteint des températures extrêmement basses via le premier échangeur. Ceci présente l'inconvénient de refroidir le carburant alors qu'il est plutôt nécessaire de le réchauffer. D'autre part, si jamais de l'eau était présente dans le carburant, cette eau pourrait geler et former des cristaux de glace qui bloqueraient le circuit d'alimentation en carburant, notamment les servovalves, et entraineraient des problèmes au niveau de l'opérabilité de la turbomachine.

Il est connu d'installer une dérivation reliant directement l'entrée d'huile du premier échangeur thermique à la sortie d'huile du premier échangeur thermique, ladite dérivation étant équipée d'un clapet à pression de sécurité pour dévier de l'huile via la dérivation en cas de surpression. Ce type de clapet à pression est configuré pour permettre à l'huile de circuler via la dérivation uniquement, et ce à un débit maximum (i.e. perte de charge nominale du clapet nulle), lorsque le rapport entre la perte de charge nominale du premier échangeur thermique et la perte de charge effective entre l'entrée et la sortie d'huile du premier échangeur thermique est inférieur ou égal à 0.5. En d'autres termes, lorsque la perte de charge nominale du premier échangeur thermique est 0.2 MPa (MegaPascal) (i.e. 2 bars), le clapet s'ouvre lorsque la perte de charge effective (différence de pression entre l'entrée et la sortie du premier échangeur thermique) est supérieure ou égale à 0.4 MPa (i.e. 4 bars). Une telle surpression survient lorsque le premier échangeur thermique est encrassé ou bouché. Ce clapet à pression a uniquement une fonction de soupape de sécurité pour éviter tout dégât causé par une surpression.

Cependant, lorsque l'air est particulièrement froid, le clapet à pression de sécurité ne s'ouvre pas. L'huile passe par le premier échangeur et atteint des températures trop froides pour assurer le réchauffement nécessaire du carburant.

US 2009/313999 divulgue un procédé et un appareil pour commander du carburant dans un moteur à turbine à gaz, FR 2 969 701 et FR 2 951 228 divulguent un procédé et système de gestion d'échanges thermiques entre fluides dans une turbomachine, US 2 865 580 divulgue un système de refroidissement d'huile et de réduction de trainée et US 2011/232293 divulgue un système de gestion de température de carburant.

### PRESENTATION DE L'INVENTION

Un but de la présente invention est de remédier au moins substantiellement aux inconvénients mentionnés ci avant.

L'invention atteint son but en proposant un procédé de régulation de refroidissement d'huile au sein d'un dispositif de refroidissement d'huile de turbomachine défini par la revendication 1, le dispositif comprenant un premier échangeur thermique monté en série avec un deuxième échangeur thermique, le premier échangeur thermique étant un échangeur huile/air tandis que le deuxième échangeur thermique est un échangeur huile/carburant, chaque échangeur thermique présentant une entrée d'huile et une sortie d'huile, une dérivation reliant directement l'entrée d'huile du premier échangeur thermique à la sortie d'huile du premier échangeur thermique, et un régulateur de débit pour réguler le débit d'huile s'écoulant via la dérivation, dans lequel on autorise la circulation d'huile via la dérivation à l'aide du régulateur de débit lorsque la température de l'huile est inférieure ou égale à une température prédéterminée comprise entre 70°C (soixante-dix degrés Celsius) et 90°C (quatre-vingt-dix degrés Celsius), préférentiellement égale à environ 80°C (quatre-vingt degrés Celsius).

Bien entendu, dans le dispositif de refroidissement, les premier et deuxième échangeurs thermiques étant disposés au sein d'un circuit d'huile fermé, le premier échangeur peut être disposé en amont ou en aval du deuxième échangeur thermique par rapport à un point de référence du circuit dans le sens de l'écoulement de l'huile au sein du dispositif de refroidissement d'huile, l'huile circulant de l'amont vers l'aval.

On comprend donc que lorsque l'huile présente une température inférieure à la température prédéterminée, le régulateur de débit est actionné de telle sorte que l'huile s'écoule préférentiellement par la dérivation. Contrairement à l'état de la technique connu, l'huile n'ayant pas à atteindre une pression dynamique prédéterminée pour pouvoir passer par la dérivation, on évite qu'une partie de l'huile s'écoule malgré tout au travers du premier échangeur thermique grâce à cette pression dynamique atteinte pour activer le premier clapet. Ainsi, en activant le régulateur de débit en fonction de la température, aucune contrainte en pression n'est exercée sur l'huile ce qui assure que l'huile circule préférentiellement via la dérivation plutôt que par le premier échangeur thermique, ce dernier présentant une résistance à l'écoulement d'huile supérieure à celle de la dérivation et du régulateur de débit (par exemple un tuyau équipé d'une vanne ouverte).

Les inventeurs ont constaté avec surprise que c'est uniquement lorsque la température de l'huile devient supérieure à la température prédéterminée que le carburant n'a plus besoin d'être réchauffé en priorité. En d'autres termes, les inventeurs ont constaté avec surprise que le carburant doit être réchauffé en priorité (i.e. on autorise l'huile à circuler via la dérivation) uniquement lorsque la température de l'huile est inférieure à la température prédéterminée.

Préférentiellement, lorsque la température d'huile est inférieure à la température prédéterminée, on commande le régulateur de débit de sorte que sa perte de charge soit inférieure ou égale à 0.2 MPa (i.e. 2 bars), préférentiellement 0.1 MPa (i.e. 1 bars) de manière à ce que plus de 95% de l'huile circule via la dérivation tandis que moins de 5% d'huile circule via le premier échangeur thermique. Une telle configuration est particulièrement avantageuse et permet de s'assurer que l'huile n'est pas refroidie par le premier échangeur thermique lorsque la température de l'huile est inférieure à la température prédéterminée.

On autorise aussi la circulation d'huile via la dérivation lorsque le rapport entre la perte de charge nominale du premier échangeur thermique et la perte de charge effective entre l'entrée d'huile et la sortie d'huile du premier échangeur thermique est inférieur ou égal à un ratio prédéterminé compris entre 0.7 et 0.9, préférentiellement égal à environ 0.8.

Pour rappel, dans un circuit hydraulique, la perte de charge correspond à la différence de pression entre deux points dudit circuit. La perte de charge est représentative des résistances rencontrées par le fluide pour circuler entre ces deux points.

De même, pour rappel, la valeur d'un paramètre est dite « nominale » lorsqu'elle correspond à la valeur théorique prévue par le constructeur. Par exemple, une perte de charge nominale de 0.2 MPa d'un échangeur thermique signifie que ledit échangeur thermique est conçu pour fonctionner correctement (i.e. échange de chaleur optimal), lorsque la perte de charge entre l'entrée et la sortie dudit échangeur est de 0.2 MPa, ou bien qu'il génère une perte de charge de 0.2 MPa en fonctionnement normal.

La valeur d'un paramètre dite « effective » est la valeur que prend concrètement ce paramètre à un instant donné et/ou dans une configuration donnée.

Lorsque l'huile n'est pas encore chaude, c'est-à-dire lorsque la température de l'huile est supérieure à la température prédéterminée mais inférieure à une température chaude comprise entre 110°C (cent dix degrés Celsius) à 130°C (cent trente degrés Celsius), préférentiellement égale à environ 120°C (cent vingt degrés Celsius), il n'est pas nécessaire d'exploiter toute la capacité de refroidissement du premier échangeur thermique, et donc de faire circuler toute l'huile via le premier échangeur thermique. En effet, lorsque la température de l'huile est comprise entre la température prédéterminée et la température chaude les besoins de refroidissement de l'huile ne sont pas maximaux. Le ratio prédéterminé permet de réaliser une telle régulation, en permettant de faire également circuler de l'huile via la dérivation dans ces conditions.

Lorsque la température de l'huile est comprise entre la température prédéterminée et la température chaude sa viscosité est plus importante que lorsque sa température est supérieure ou égale à la température chaude. Ainsi, lorsque la température de l'huile est inférieure à la température chaude, la perte de charge effective entre l'entrée et la sortie d'huile du premier échangeur est supérieure à cette même perte de charge lorsque la température de l'huile est supérieure à la température chaude. Le ratio prédéterminé est représentatif de cette différence perte de charge effective, et grâce à ce paramètre on peut dévier une quantité adéquate d'huile dans la dérivation en fonction de cette différence de perte de charge effective.

Ceci permet par ailleurs d'utiliser un premier échangeur thermique présentant une grande perte de charge nominale, par exemple supérieure à 0.4 MPa. Des tels échangeurs thermiques présentent l'avantage d'être particulièrement efficace lorsque la température de l'huile est supérieure à la température chaude (i.e. refroidissement de l'huile amélioré lorsque l'huile est chaude). Par ailleurs, de tels échangeurs thermiques présentent l'avantage d'opposer encore plus de résistance à l'écoulement lorsque l'huile est froide, ce qui permet de dévier encore plus facilement l'huile via la dérivation lorsque la température de l'huile est inférieure à la température prédéterminée. Néanmoins de tels échangeurs thermiques augmentent la perte de charge effective globale du dispositif de refroidissement, tandis qu'il est avantageux de conserver cette perte de charge du dispositif aussi basse que possible. Autoriser la circulation de l'huile via la dérivation lorsque le ratio est inférieur au ratio prédéterminé permet également de réduire la perte de charge effective globale du dispositif de refroidissement lorsque la température de l'huile est comprise entre la température prédéterminée et la température chaude, c'est-à-dire lorsque la fluidité maximale de l'huile n'est pas encore atteinte.

Avantageusement, le débit d'huile circulant via la dérivation lorsque le ratio est inférieur ou égal au ratio prédéterminé tandis que la température de l'huile est supérieure à la température prédéterminée, est inférieur au débit d'huile circulant via la dérivation lorsque la température de l'huile est inférieure à la température prédéterminée.

Ceci permet d'assurer un refroidissement intermédiaire de l'huile lorsque sa température est comprise entre la température prédéterminée et la température chaude. En d'autres termes, plus d'huile circule dans la dérivation (et n'est donc pas refroidie) lorsque la température de l'huile est inférieure à la température prédéterminée que lorsque la température de l'huile est comprise entre la température prédéterminée et la température chaude. Ceci permet d'opérer un refroidissement adapté à la température de l'huile lorsque sa température est comprise entre la température prédéterminée et la température chaude.

Avantageusement, on bloque la circulation d'huile via la dérivation à l'aide du régulateur de débit lorsque la température de l'huile est supérieure à la température prédéterminée tandis que le ratio est supérieur au ratio prédéterminé.

Dans ces conditions, on assure que l'intégralité de l'huile circule par le premier échangeur thermique, et donc que le refroidissement est maximum lorsque l'huile est chaude (température supérieure à la température chaude). En outre, si la pression d'huile devient trop importante (le ratio devenant alors inférieur au ratio prédéterminé), par exemple en cas d'encrassement du premier échangeur thermique, le régulateur de débit permet à l'huile de s'écouler en partie via la dérivation. Ainsi, le régulateur de débit forme également une soupape de sécurité pour prévenir les risques de surpression.

L'invention concerne également un dispositif de refroidissement d'huile de turbomachine défini par la revendication 4, comprenant un premier échangeur thermique monté en série avec un deuxième échangeur thermique, le premier échangeur thermique étant un échangeur huile/air tandis que le deuxième échangeur thermique est un échangeur huile/carburant, chaque échangeur thermique présentant une entrée d'huile et une sortie d'huile, une dérivation reliant directement l'entrée d'huile du premier échangeur thermique à la sortie d'huile du premier échangeur thermique, et un régulateur de débit pour réguler le débit d'huile s'écoulant via la dérivation, le régulateur de débit comprend un clapet thermique, ledit clapet thermique étant configuré pour être ouvert lorsque la température de l'huile est inférieure à une température prédéterminée comprise entre 70°C (soixante-dix degrés Celsius) et 90°C (quatre-vingt-dix degrés Celsius), préférentiellement égale à environ 80°C (quatre-vingt degrés Celsius).

On comprend qu'un clapet thermique est un clapet dont l'ouverture et la fermeture sont pilotées en fonction de la température. Par exemple, un tel clapet peut être piloté par un moteur externe qui est activé en fonction de la température de l'huile mesurée par une sonde. Selon un autre exemple, le clapet est relié à un organe sensible à la chaleur et qui se dilate en conséquence, grâce à quoi la soupape du clapet passe d'une position fermée à une position ouverte et vice versa en fonction de la température de l'huile. On comprend que la position ouverte, fermée, ou intermédiaire entre la position ouverte et la position fermée est indépendante de la pression exercée par l'huile. Ainsi, un tel clapet peut être ouvert ou fermé quelle que soit la pression exercée par l'huile. Ceci présente l'avantage de minimiser la perte de charge nominale du régulateur de débit et d'aiguiller un maximum d'huile dans la dérivation lorsque le clapet thermique est ouvert (partiellement ou en totalité).

On comprend donc que le clapet thermique est fermé lorsque la température est supérieure à la température prédéterminée, et est au moins partiellement ouvert lorsque la température est inférieure ou égale à la température prédéterminée. Préférentiellement, le clapet est totalement ouvert lorsque la température de l'huile est inférieure de 10°C à la température prédéterminée.

Avantageusement, la perte de charge nominale du clapet thermique lorsqu'il est ouvert est au plus égale à 10% de la perte de charge nominale du premier échangeur thermique. On s'assure ainsi que minimum de 85% à 95% de l'huile circule par la dérivation lorsque le clapet thermique est ouvert.

Le régulateur de débit comprend un clapet à pression (ou clapet à pression différentielle ou encore clapet différentiel), ledit clapet à pression étant configuré pour être ouvert lorsque le ratio entre la perte de charge nominale du premier échangeur thermique et la perte de charge effective entre l'entrée d'huile et la sortie d'huile du premier échangeur thermique est inférieur ou égal à un ratio prédéterminé compris entre 0.7 et 0.9, préférentiellement égal à environ 0.8.

On comprend qu'un clapet à pression est un clapet dont l'ouverture et la fermeture sont pilotées en fonction de la pression. Par exemple le clapet tend à être fermé grâce des efforts générés par des déformations élastiques d'un élément du clapet ou d'un élément relié au clapet. Ces efforts s'opposent à la pression dynamique (ou pression d'écoulement) exercée par l'huile sur le clapet lorsque l'huile circule. Ainsi, lorsque la pression dynamique de l'huile atteint la pression prédéterminée, ladite pression dynamique est suffisante pour déplacer et ouvrir le clapet. Au plus la pression dynamique augmente, au plus le clapet a tendance à s'ouvrir, et ce jusqu'à la position d'ouverture complète du clapet (ou ouverture maximum). Lorsque la pression dynamique chute, le clapet se referme.

Selon une variante, le clapet thermique et le clapet à pression forment un seul et même clapet dont l'ouverture est fonction de la température et de la perte de charge effective. Selon une autre variable, le régulateur de débit comprend deux clapets indépendants, à savoir un clapet thermique et un clapet à pression, montés en parallèles.

L'invention concerne également une turbomachine comprenant un dispositif de refroidissement d'huile selon l'invention.

### BREVE DESCRIPTION DES DESSINS

L'invention et ses avantages seront mieux compris à la lecture de la description détaillée faite ci-après d'un mode de réalisation de l'invention donné à titre d'exemple non limitatif. Cette description fait référence aux pages de figures annexées, sur lesquelles :
- la figure 1 représente un turboréacteur équipé d'un dispositif de refroidissement selon l'invention,
- la figure 2 représente schématiquement le dispositif de refroidissement de la figure 1,
- la figure 3 représente l'évolution de la perte de charge entre l'entrée et la sortie d'huile du premier échangeur thermique en fonction de la température de l'huile.

### DESCRIPTION DETAILLEE D'EXEMPLES DE REALISATION

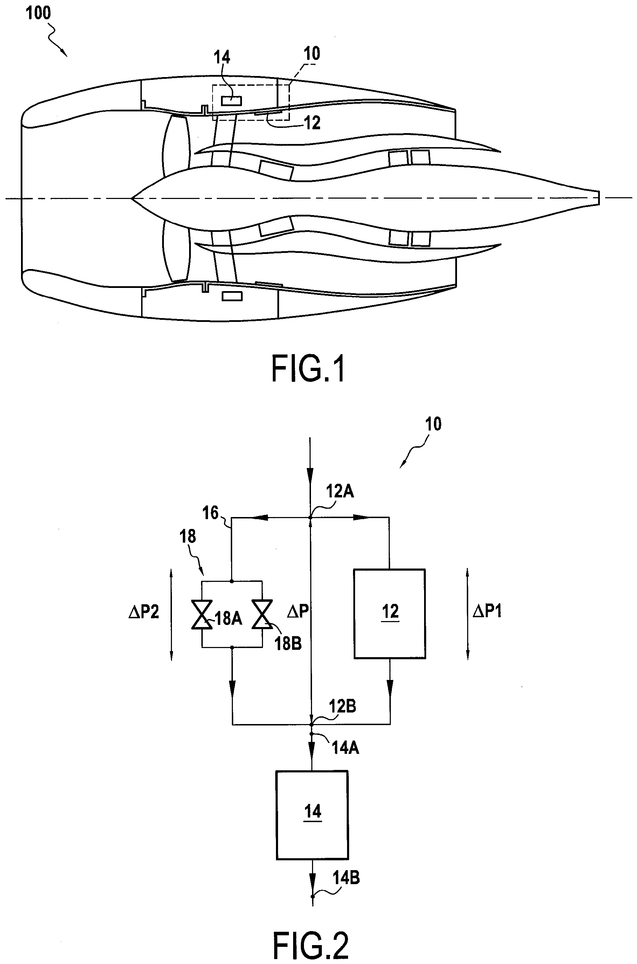

La figure 1 représente une turbomachine 100, et plus particulièrement un turboréacteur d'avion 100, comprenant un dispositif de refroidissement d'huile 10. Ce dispositif de refroidissement 10 comprend un premier échangeur thermique 12, ce premier échangeur 12 étant un échangeur thermique huile/air, et un deuxième échangeur thermique 14, ce deuxième échangeur thermique 14 étant un échangeur thermique huile/carburant.

Le dispositif de refroidissement 10 est représenté partiellement sur la figure 2. Le sens des flèches les plus épaisses indique le sens de circulation de l'huile au sein du dispositif de refroidissement 10. Le premier échangeur 12 comprend une entrée d'huile 12A et une sortie d'huile 12B. Le deuxième échangeur 14 comprend une entrée d'huile 14A et une sortie d'huile 14B. La sortie d'huile 12B du premier échangeur 12 est relié à l'entrée d'huile 14A du deuxième échangeur 14, de sorte que le premier échangeur 12 et le deuxième échangeur 14 sont montés en série. Bien entendu, les échangeurs 12 et 14 peuvent être montés en série directement ou indirectement, ou encore dans un ordre inverse. Dans cet exemple ils sont montés en série directement.

Le dispositif de refroidissement 10 comprend également une dérivation 16 qui relie directement l'entrée d'huile 12A du premier échangeur 12 à la sortie d'huile 12B du premier échangeur 12. La dérivation 16 est équipée d'un régulateur de débit 18 permettant de réguler le débit d'huile circulant via la dérivation 16 depuis l'entrée 12A vers la sortie 12B.

Le régulateur de débit 18 comprend un clapet thermique 18A et un clapet à pression 18B montés en parallèle. Ces clapets 18A et 18B sont des clapets classiques connus par l'homme du métier. La section d'ouverture maximale du clapet thermique est supérieure à la section d'ouverture du clapet à pression de sorte que le débit maximum autorisé par le clapet thermique est supérieur au débit maximum autorisé du clapet à pression.

Lorsque l'huile est froide, c'est-à-dire lorsque sa température est inférieure à une température prédéterminée, dans cet exemple 80°C, on autorise, grâce au régulateur de débit 18, l'huile de circuler par la dérivation 16. Le clapet thermique 18A est alors ouvert. Selon différentes variantes soit le clapet thermique 18A est piloté pour être ouvert (par exemple électrovanne) soit il s'ouvre automatiquement (par exemple thermostat).

Lorsque le clapet thermique 18A est ouvert, la perte de charge nominale ΔP1 du premier échangeur thermique 12 est très supérieure à la perte de charge nominale ΔP2 du régulateur de débit 18. Dans cet exemple, la perte de charge nominal ΔP2 du régulateur de débit 18 lorsque le clapet thermique 18A est ouvert est au moins 10 fois inférieure à la perte de charge de l'échangeur thermique 12. Ainsi, le premier échangeur thermique 12 présente une résistance à l'écoulement plus grande que celle de la dérivation 16 et du régulateur de débit 18 de sorte que plus de 95% de l'huile s'écoule par la dérivation 16 tandis que moins de 5% de l'huile s'écoule par le premier échangeur thermique 12.

Lorsque la température de l'huile est supérieure à 80°C, le clapet thermique 18A est fermé. Ainsi, selon différentes variantes, soit le clapet thermique 18A est piloté pour être fermé (par exemple électrovanne) soit il se ferme automatiquement (par exemple thermostat).

Lorsque la température de l'huile est supérieure à 80°C mais inférieure à la température chaude, dans cet exemple 120°C, la viscosité de l'huile est telle que la perte de charge effective ΔP entre l'entrée d'huile 12A et la sortie d'huile 12B peut être supérieure à la perte de charge nominale ΔP1 du premier échangeur thermique 12.

Dans ces conditions, lorsque le ratio R entre la perte de charge nominale ΔP1 du premier échangeur thermique 12 et la perte de charge effective ΔP entre l'entrée d'huile 12A et la sortie d'huile 12B (R = ΔP1/ΔP) devient supérieur ou égal à un ratio prédéterminé, dans cet exemple 0.8, le clapet à pression 18B est ouvert. Selon différentes variantes soit le clapet à pression 18B est piloté pour être ouvert (par exemple électrovanne) soit il s'ouvre automatiquement (par exemple clapet à ressort).

En d'autres termes, le clapet à pression 18B est configuré pour être ouvert lorsque la perte de charge effective ΔP = ΔP1/R. Dans cet exemple la perte de charge nominale du premier échangeur thermique 12 est égale à 0.4 MPa (4 bars). Par conséquent, dans cet exemple, le clapet à pression 18B est configuré pour être ouvert lorsque la perte de charge effective ΔP est supérieure ou égale à 0.5 MPa (5 bars). Le passage de la position totalement fermé à la position totalement ouvert peut être plus ou moins progressif. Par exemple, le clapet à pression 18B est fermé lorsque la différence de charge effective ΔP est inférieure à 0.5 MPa, totalement ouvert lorsque la différence de charge effective ΔP est supérieure ou égale à 0.6 MPa (6 bars), et en partie ouvert lorsque la différence de charge effective ΔP est comprise entre 0.5 MPa et 0.6 MPa.

La perte de charge nominale ΔP2 du régulateur de débit lorsque le clapet thermique 18A est fermé tandis que le clapet à pression 18B est totalement ouvert est de 0.6 MPa. Ainsi, lorsque le clapet thermique 18A est fermé tandis que le clapet à pression 18B est totalement ouvert, 30% de l'huile passe par la dérivation 16 tandis que 70% de l'huile passe par le premier échangeur thermique 12.

Lorsque la température de l'huile est supérieure à 80°C et le ratio R est inférieur à 0.8, le clapet thermique 18A et le clapet à pression 18B sont fermés. De même, lorsque la température de l'huile est supérieure à 120°C en condition normale -une condition anormale étant par exemple un encrassement du premier échangeur thermique occasionnant une surpression- le régulateur de débit 18 est piloté et/ou configuré pour que le clapet thermique 18A et le clapet à pression 18B restent fermés. Dans ces deux cas, l'huile ne circule pas via la dérivation 16 tandis que 100% de l'huile circule via le premier échangeur thermique 12. Selon différentes variantes, pour fermer le clapet à pression 18B, soit le clapet à pression 18B est piloté pour être fermé (par exemple électrovanne) soit il se ferme automatiquement (par exemple clapet à ressort).

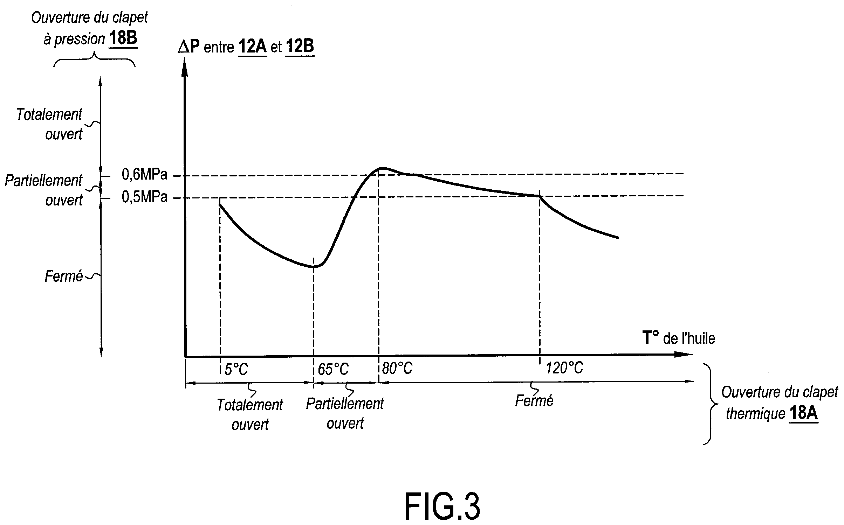

La figure 3 représente l'évolution de la perte de charge effective ΔP en fonction de la température de l'huile.

Lorsque la turbomachine 100 évolue dans un milieu particulièrement froid (par exemple température de l'air à -30°C) tandis que la turbomachine tourne à haut régime (par exemple décollage), la température de l'huile est inférieure à la température prédéterminée, et donc le clapet thermique 18A est totalement ouvert. La perte de charge effective ΔP entre l'entrée d'huile 12A et la sortie d'huile 12B est essentiellement due à la viscosité de l'huile. L'huile ayant tendance à se réchauffer au fur et à mesure que la turbomachine 100 fonctionne, elle devient de plus en plus fluide, grâce à quoi la perte de charge effective ΔP chute. Lorsque l'huile atteint une température de 65°C, le clapet thermique 18A commence se fermer, le clapet 18A étant totalement fermé à 80°C. Ainsi, entre 65°C et 80°C, l'augmentation de la perte de charge effective ΔP est essentiellement due à la fermeture du clapet thermique 18A, bien que la fluidité de l'huile continue d'augmenter.

On remarque que pendant la fermeture du clapet thermique 18A, la perte de charge effective ΔP devient supérieure à 0.5 MPa, de sorte que le clapet à pression 18B commence à s'ouvrir. Lorsque la perte de charge effective ΔP atteint et dépasse 0.6 MPa, le clapet à pression 18B est totalement ouvert. Ainsi, lorsque l'huile présente une température de 80°C le clapet thermique 18A est fermé tandis que le clapet à pression 18B est totalement ouvert.

La turbomachine 100 continuant de fonctionner, la température et la fluidité de l'huile continuent d'augmenter de sorte que la perte de charge effective ΔP diminue. Lorsque la perte de charge effective ΔP devient inférieure à 0.6 MPa, le clapet à pression 18B commence à se fermer, comme l'indique le « plateau » de la courbe entre 80°C et 120°C. Ensuite, la perte de charge ΔP continue de baisser grâce à la fluidité de l'huile qui augmente, grâce à quoi le clapet à pression 18B se ferme progressivement.

Lorsque l'huile atteint 120°C, la perte de charge effective ΔP redevient inférieure à 0.5 MPa, de sorte que le clapet à pression 18B se ferme totalement. On constate qu'au-delà de 120°C, la perte de charge effective ΔP continue de décroitre, essentiellement à cause de la fluidité de l'huile qui augmente.

On note que si une impureté ou un encrassement venait obturer le premier échangeur thermique 12 tandis que le clapet thermique 18A et le clapet à pression 18B sont fermés, alors lorsque la perte de charge effective ΔP deviendrait supérieure à 0.5MPa et le clapet à pression 18B s'ouvrirait et servirait également de soupape de sécurité.

## Revendications

1. Procédé de régulation de refroidissement d'huile au sein d'un dispositif de refroidissement d'huile (10) de turbomachine (100) comprenant un premier échangeur thermique (12) monté en série avec un deuxième échangeur thermique (14), le premier échangeur thermique (12) étant un échangeur huile/air tandis que le deuxième échangeur thermique (14) est un échangeur huile/carburant, chaque échangeur thermique présentant une entrée d'huile (12A, 14A) et une sortie d'huile (12B, 14B), une dérivation (16) reliant directement l'entrée d'huile (12A) du premier échangeur thermique (12) à la sortie d'huile (12B) du premier échangeur thermique (12), et un régulateur de débit (18) pour réguler le débit d'huile s'écoulant via la dérivation (16), ledit procédé étant **caractérisé en ce qu'**on autorise la circulation d'huile via la dérivation (16) à l'aide du régulateur de débit (18) lorsque la température de l'huile est inférieure ou égale à une température prédéterminée comprise entre 70°C et 90°C, préférentiellement égale à environ 80°C, dans lequel on autorise aussi la circulation d'huile via la dérivation (16) lorsque le ratio entre la perte de charge nominale (ΔP1) du premier échangeur thermique (12) et la perte de charge effective (ΔP) entre l'entrée d'huile (12A) et la sortie d'huile (12B) du premier échangeur thermique (12) est inférieur ou égal à un ratio prédéterminé compris entre 0.7 et 0.9, préférentiellement 0.8.

2. Procédé selon la revendication 1, dans lequel le débit d'huile circulant via la dérivation (16) lorsque le ratio est inférieur ou égal au ratio prédéterminé tandis que la température de l'huile est supérieure à la température prédéterminée, est inférieur au débit d'huile circulant via la dérivation (16) lorsque la température de l'huile est inférieure à la température prédéterminée.

3. Procédé selon la revendication 1 ou 2, dans lequel on bloque la circulation d'huile via la dérivation (16) à l'aide du régulateur de débit (18) lorsque la température de l'huile est supérieure à la température prédéterminée tandis que le ratio est supérieur au ratio prédéterminé.

4. Dispositif de refroidissement d'huile (10) de turbomachine (100) comprenant un premier échangeur thermique (12) monté en série avec un deuxième échangeur thermique (14), le premier échangeur thermique (12) étant un échangeur huile/air tandis que le deuxième échangeur thermique (14) est un échangeur huile/carburant, chaque échangeur thermique présentant une entrée d'huile (12A, 14A) et une sortie d'huile (12B, 14B), une dérivation (16) reliant directement l'entrée d'huile (12A) du premier échangeur thermique (12) à la sortie d'huile (12B) du premier échangeur thermique (12), et un régulateur de débit (18) pour réguler le débit d'huile s'écoulant via la dérivation (16), **caractérisé en ce que** le régulateur de débit (18) comprend un clapet thermique (18A), ledit clapet thermique (18A) étant configuré pour être ouvert lorsque la température de l'huile est inférieure à une température prédéterminée comprise entre 70°C et 90°C, préférentiellement égale à environ 80°C, dans lequel le régulateur de débit (18) comprend un clapet à pression (18B), ledit clapet à pression (18B) étant configuré pour être ouvert lorsque le ratio entre la perte de charge nominale (ΔP1) du premier échangeur thermique (12) et la perte de charge effective (ΔP) entre l'entrée d'huile (12A) et la sortie d'huile (12B) du premier échangeur thermique (12) est inférieur ou égal à un ratio prédéterminé compris entre 0.7 et 0.9, préférentiellement 0.8.

5. Turbomachine (100) comprenant un dispositif de refroidissement d'huile (10) selon la revendication 4.

## Patentansprüche

1. Verfahren zur Regelung der Ölkühlung in einer Ölkühlvorrichtung (10) einer Turbomaschine (100), umfassend einen ersten Wärmetauscher (12), der in Reihe mit einem zweiten Wärmetauscher (14) montiert ist, wobei der erste Wärmetauscher (12) ein Öl/Luft-Tauscher ist, während der zweite Wärmetauscher (14) ein Öl/Treibstoff-Tauscher ist, wobei jeder Wärmetauscher einen Öleinlass (12A, 14A) und einen Ölauslass (12B, 14B) aufweist, eine Abzweigung (16), die den Öleinlass (12A) des ersten Wärmetauschers (12) direkt mit dem Ölauslass (12B) des ersten Wärmetauschers (12) verbindet, und einen Durchflussregler (18), um den Öldurchfluss zu regeln, der durch die Abzweigung (16) strömt, wobei das genannte Verfahren **dadurch gekennzeichnet ist, dass** der Ölkreislauf über die Abzweigung (16) mit Hilfe des Durchflussreglers (18) gestattet wird, wenn die Temperatur des Öls kleiner oder gleich einer vorherbestimmten Temperatur zwischen 70 °C und 90 °C ist, vorzugsweise gleich ungefähr 80 °C, wobei der Ölkreislauf über die Abzweigung (16) auch gestattet wird, wenn das Verhältnis zwischen dem Nenndruckverlust (ΔP1) des ersten Wärmetauschers (12) und dem effektiven Druckverlust (ΔP) zwischen dem Öleinlass (12A) und dem Ölauslass (12B) des ersten Wärmetauschers (12) kleiner oder gleich einem vorherbestimmten Verhältnis zwischen 0,7 und 0,9 ist, vorzugsweise 0,8.

2. Verfahren gemäß Anspruch 1, wobei der Öldurchfluss, der durch die Abzweigung (16) zirkuliert, wenn das Verhältnis kleiner oder gleich dem vorherbestimmten Verhältnis ist, während die Temperatur des Öls größer als die vorherbestimmte Temperatur ist, kleiner ist als der Öldurchfluss, der durch die Abzweigung (16) zirkuliert, wenn die Temperatur des Öls kleiner als die vorherbestimmte Temperatur ist.

3. Verfahren gemäß Anspruch 1 oder 2, wobei der Ölkreislauf über die Abzweigung (16) mit Hilfe des Durchflussreglers (18) blockiert wird, wenn die Temperatur des Öls größer ist als die vorherbestimmte Temperatur, während das Verhältnis größer ist als das vorherbestimmte Verhältnis.

4. Ölkühlvorrichtung (10) einer Turbomaschine (100), umfassend einen ersten Wärmetauscher (12), der in Reihe mit einem zweiten Wärmetauscher (14) montiert ist, wobei der erste Wärmetauscher (12) ein Öl/Luft-Tauscher ist, während der zweite Wärmetauscher (14) ein Öl/Treibstoff-Tauscher, wobei jeder Wärmetauscher einen Öleinlass (12A, 14A) und einen Ölauslass (12B, 14B) aufweist, eine Abzweigung (16), die den Öleinlass (12A) des ersten Wärmetauschers (12) direkt mit dem Ölauslass (12B) des ersten Wärmetauschers (12) verbindet, und einen Durchflussregler (18), um den Öldurchfluss zu regeln, der durch die Abzweigung (16) strömt, **dadurch gekennzeichnet, dass** der Durchflussregler (18) ein Wärmeventil (18A) umfasst, wobei das genannte Wärmeventil (18A) dafür ausgelegt ist, um offen zu sein, wenn die Temperatur des Öls kleiner ist als eine vorherbestimmte Temperatur zwischen 70 °C und 90 °C, vorzugsweise gleich ungefähr 80 °C, wobei der Durchflussregler (18) ein Druckventil (18B) umfasst, wobei das genannte Druckventil (18B) dafür ausgelegt ist, um offen zu sein, wenn das Verhältnis zwischen dem Nenndruckverlust (ΔP1) des ersten Wärmetauschers (12) und dem effektiven Druckverlust (ΔP) zwischen dem Öleinlass (12A) und dem Ölauslass (12B) des ersten Wärmetauschers (12) kleiner oder gleich einem vorherbestimmten Verhältnis zwischen 0,7 und 0,9 ist, vorzugsweise 0,8.

5. Turbomaschine (100), umfassend eine Ölkühlvorrichtung (10) gemäß Anspruch 4.

## Claims

1. A method for regulating oil cooling within an oil cooling device (10) of a turbomachine (100) including a first heat exchanger (12) mounted in series with a second heat exchanger (14), the first heat exchanger (12) being an oil/air exchanger while the second heat exchanger (14) is an oil/fuel exchanger, each heat exchanger having an oil inlet (12A, 14A) and an oil outlet (12B, 14B), a bypass (16) directly connecting the oil inlet (12A) of the first heat exchanger (12) to the oil outlet (12B) of the first heat exchanger (12), and a flow regulator (18) to regulate the flow rate of oil flowing through the bypass (16), said method being **characterized in that** circulation of oil through the bypass (16) is allowed using the flow regulator (18) when the temperature of the oil is less than or equal to a predetermined temperature comprised between 70°C and 90°C, preferably equal to about 80°C, wherein circulation of oil through the bypass (16) is also allowed when the ratio between the nominal head loss (ΔP1) of the first heat exchanger (12) and the effective head loss (ΔP) between the oil inlet (12A) and the oil outlet (12B) of the first heat exchanger (12) is less than or equal to a predetermined ratio comprised between 0.7 and 0.9, preferably 0.8

2. The method according to claim 1, wherein the flow rate of oil circulating through the bypass (16), when the ratio is less than or equal to the predetermined ratio while the temperature of the oil is greater than the predetermined temperature, is less than the flow rate of oil circulating through the bypass (16) when the temperature of the oil is less than the predetermined temperature.

3. The method according to claim 1 or 2, wherein the circulation of oil through the bypass (16) is blocked using the flow regulator (18) when the temperature of the oil is greater than the predetermined temperature while the ratio is greater than the predetermined ratio.

4. An oil cooling device (10) for a turbomachine (100) including a first heat exchanger (12) mounted in series with a second heat exchanger (14), the first heat exchanger (12) being an oil/air exchanger while the second heat exchanger (14) is an oil/fuel exchanger, each heat exchanger having an oil inlet (12A, 14A) and an oil outlet (12B, 14B), a bypass (16) directly connecting the oil inlet (12A) of the first heat exchanger (12) to the oil outlet (12B) of the first heat exchanger (12), and a flow regulator (18) to regulate the flow rate of oil flowing through the bypass (16), **characterized in that** the flow regulator (18) includes a thermal valve (18A), said thermal valve (18A) being configured to be open when the oil temperature is less than a predetermined temperature comprised between 70°C and 90°C, preferably equal to about 80°C, wherein the flow regulator (18) includes a pressure valve (18B), said pressure valve (18B) being configured to be open when the ratio between the nominal head loss (ΔP1) of the first heat exchanger (12) and the effective head loss (ΔP) between the oil inlet (12A) and the oil outlet (12B) of the first heat exchanger (12) is less than or equal to a predetermined ratio comprised between 0.7 and 0.9, preferably 0.8.

5. A turbomachine (100) including an oil cooling device (10) according to claim 4.
